## Europäisches Patentamt

## European Patent Office

## Office européen des brevets

(11) Publication number: **0 156 425**
**B1**

(12) **EUROPEAN PATENT SPECIFICATION**

(45) Date of publication of patent specification: **27.06.90**

(21) Application number: **85200343.3**

(22) Date of filing: **08.03.85**

(51) Int. Cl.⁵: **B 01 J 37/02,** B 01 J 23/85, B 01 J 23/24, C 10 G 45/08, C 10 G 45/04

(54) **Process for the preparation of improved hydroconversion catalysts and catalysts thus prepared.**

(30) Priority: **26.03.84 US 593060**

(43) Date of publication of application:
**02.10.85 Bulletin 85/40**

(45) Publication of the grant of the patent:
**27.06.90 Bulletin 90/26**

(84) Designated Contracting States:
**BE DE FR GB NL SE**

(56) References cited:
**US-A-3 654 317
US-A-4 082 652
US-A-4 266 070
US-A-4 368 141**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Thompson, Mark Stewart
15830 Sierra Grande Drive
Houston Texas 77083 (US)**
Inventor: **Adams, Charles Terrell
739 Bison
Houston Texas 77079 (US)**

(74) Representative: **Aalbers, Onno et al
P.O. Box 302
NL-2501 CH The Hague (NL)**

Courier Press, Leamington Spa, England.

## Description

This invention relates to a process for preparing improved hydroconversion catalysts containing molybdenum and/or tungsten, particularly with respect to hydrodenitrification (HDN) activity. The invention also relates to the catalyst thus prepared.

Considerable research has been undertaken to develop and commercialize new, cost effective hydroconversion catalysts for large volume first stage hydrocracking and catalytic cracking feed hydrotreater applications. The inclusion of significant amounts of $535°C^+$ residual components, including cracked stocks, in the feed to these processes has caused severe activity and stability problems for the catalysts currently used commercially in these applications. The growing demand for new catalysts for upgrading such poor quality feedstocks has led to the discovery of improved catalysts by oxidizing zero-valent molybdenum and/or tungsten with elemental sulphur ($S_8$) to yield metal sulphides directly instead of by first oxidizing the metals (e.g., by calcining in air) and then sulphiding them. Another method for producing catalysts comprising molybdenum sulphide is described in US—A—4,082,652, which method comprises depositing upon a carbon support a molybdenum compound convertible to $MoS_2$, and subsequently converting said molybdenum compound to $MoS_2$.

It is known to combine molybdenum carbonyls with alumina to prepare a catalyst for the metathesis of olefins (J. Mol. Catalysis, 1 (1975/76)77—84). It has now been found that molybdenum and/or tungsten carbonyls can be directly oxidized to the corresponding sulphide with free sulphur to achieve hydroconversion catalysts with greatly enhanced hydrodenitrification activity.

The present invention relates to a process for preparing supported hydroconversion catalysts having improved hydrodenitrification activity, which comprises mixing an amount of molybdenum and/or tungsten carbonyl compound(s) sufficient to provide from about 10 to 20%wt metal on a suitable support (percentage based on total catalyst), with at least a catalytically active amount of an organic liquid selected from the group consisting of dienes, trienes or monoaromatics, optionally in the presence of an organic solvent; adding sufficient elemental sulphur to said liquid mixture to convert said carbonyl compound(s) to the corresponding disulphide; mixing a desired quantity of dried solid catalyst support with said liquid mixture; heating said liquid-solid mixture until metal carbonyl conversion to disulphide is substantially complete; separating supported catalyst from any excess liquid mixture; drying said catalyst and calcining said catalyst under inert gas at elevated temperature.

This invention is in particular applicable to supported hydroconversion catalysts which contain Group VIII and Group VIB metals of the Periodic Table incorporated into a support. Typically such catalysts will contain from about 1 to 5%wt nickel and/or cobalt as Group VIII metals, and from about 10 to 20%wt molybdenum or tungsten as the Group VIB metals, although from about 0.1 to 1%wt platinum or palladium may also be used.

Any of the usual catalyst supports are thought to be suitable for use in the process according to the invention. Suitable supports for the catalysts according to the invention include refractory oxides, such as alumina, silica and mixtures thereof. Crystalline synthetic zeolites such as aluminosilicates, iron silicates, gallium silicates and mixtures thereof may also be used as supports, preferably in combination with refractory oxide supports. A particularly preferred support is gamma-alumina which contains less than 1%wt silica.

Molybdenum and/or tungsten carbonyls are zero-valent as far as the metals (M) are concerned. Known metal carbonyls include $M(CO)_4$ to $M(CO)_6$, and all of these carbonyls should be equally suitable for the invention.

A substantial increase in the hydrodenitrification (HDN) activity, relative to commercial catalysts, is required to commercialize a new hydroconversion catalyst. In an effort to develop such improved catalysts, many experimental catalysts were prepared and tested for HDN activity. A standard 72 hours HDN activity test was used to evaluate these catalysts. In this test the HDN and HDS (hydrodesulphurization) activities of a catalytically cracked heavy gas oil were evaluated at 344°C and 58.2 bar $H_2$. Activities compared were based on observed rate constants for HDN (wherein the first order denitrification rate constant of the standard catalyst is defined as 1.00 and all experimental catalysts have activities measured relative to this standard).

One of the research goals was also to systematically vary the degree of interaction between metals and support, the interaction between metals, and the dispersion of the metals in an effort to determine the chemical and morphological requirements of a high activity catalyst. Described herein is a catalyst preparation method wherein surface-bound $MoS_2$ is prepared by oxidizing zero-valent Mo or W with elemental sulphur rather than reducing the metal oxide with $H_2/H_2S$ as is usually done. Catalysts prepared in this way display much greater hydrodenitrification activity (~35%) than the standard catalyst (Table 1), with the most reasonable explanation rooted in changes in the dispersion and/or metal-support interaction.

A typical catalyst is prepared by the aqueous dry impregnation of a support with phosphoric acid and $[Ni(H_2O)_4OAc]OAc$, (where OAc = acetate) followed by drying at 120°C. The impregnated support is then reacted with $Mo(CO)_6$, cycloheptatriene (CHT) and $S_8$ in refluxing THF solvent under $N_2$. This catalyst has been prepared and tested several times in a standardized activity test (Test Conditions: catalytically cracked heavy gas oil feed, 344°C, 58.2 bar $H_2$, LHSV = 1, $H_2$/oil 4:1 l/l).

In exploring the reactions of various organometallic complexes with silica and alumina it was observed

2

that Mo(cycloheptatriene)(CO)$_3$ decomposited clearly at 25°C to give the very reactive surface bound Mo(CO)$_3$ fragment and free CHT. Conceptually, the Mo(CO)$_x$ moiety is activated by replacing the tightly bound CO ligands with the loosely bound olefin. This dramatically increases the reactivity of molybdenum towards the carrier. The metal-CO stoichiometry has not been determined by elemental analysis but is consistent with the number of bands in the 2000 cm$^{-1}$ to 1900 cm$^{-1}$ region (carbonyl stretch) of the infrared part of the spectrum. This reaction gives high surface coverage of Mo (~6% Mo by weight; nearly monolayer). This is in contrast to the reported decomposition of Mo(CO)$_6$ on alumina to Mo(CO)$_3$ which results in much lower coverage (<1% Mo) and requires high temperature (Burwell, R.L., Brenner, A., *J. Mole., Cat., 1*, 77, (1975); and Howe, R.F.; *Inorg. Chem., 15*, 486, (1976)). The difference between these two reactions is probably caused by the greater lability of the alkene (CHT) as a ligand relative to CO. The Mo can then be oxidized by elemental sulphur to give MoS$_2$.

Preparatively, one mole CHT is generally used for each mole of Mo or W, however, substoichiometric amounts are equally effective. Additionally, dienes such as butadiene and monoaromatics can be substituted for CHT.

In addition to the use of alumina supports, silica supports are also interesting since it is thought that silica based catalysts should be less prone to coke formation than alumina based catalysts due to the low acidity of silica. There are great problems associated with preparing SiO$_2$ supported hydroconversion catalysts by aqueous, pore filling techniques, however. The precursor metal oxides (MoO$_3$, NiO, CoO) interact very weakly with the support, thus having very poor dispersion. This results in catalysts of very poor activity. Thus, one approach to the preparation of high activity silica based catalysts is to improve the dispersion of the metals. Based on this premise some SiO$_2$ supported catalysts of high activity have been prepared. One of the principal reasons for the superior performance of alumina supported catalysts prepared by the process according to the invention is thought to be the high metal dispersion resulting from the strong interaction of molybdenum-carbonyl fragments with surface oxygen moieties of the support. The preparation method is described in Example 2. It appears that what has been achieved is a high coverage of silica by Ni(II) and MoS$_2$, presumably with good intermingling of the two metals. This points the way to the preparation of high activity SiO$_2$ supported catalysts from low cost materials. It appears that the critical feature for the metal sulphide precursor to possess is capacity for strong interaction with the support surface (giving high dispersion) and ease of sulphiding.

Suitable hydroconversion conditions for processes using improved catalysts according to the present invention comprise a temperature of 350—420°C; a total pressure of 75—200 bar; a partial hydrogen pressure of 60—200 bar; a space velocity of 0.4—1.5 kg oil/l catalyst/hour; and a hydrogen feed rate of 250—2500 Nl/kg oil feed. The hydrodenitrification of heavy oil feeds according to the present process is preferably carried out under the following conditions: a temperature of 360—410°C; a total pressure of 100—150 bar; a partial hydrogen pressure of 80—150 bar; a space velocity of 0.4—1.0 kg oil/l catalyst/hour; and a hydrogen feed rate of 500—1500 Nl/kg oil feed.

The hydrogen applied can be pure hydrogen or a hydrogen-containing gas, preferably one comprising more than 70% of hydrogen. The hydrogen-containing gas may also contain up to about 10% of hydrogen sulphide.

It is preferred that the hydrocarbon oil feed streams contain less than 3 ppmw, and most preferably less than 1 ppmw of vanadium and nickel combined. In some cases it may be necessary to subject the hydrocarbon oil feed to a demetallization pre-treatment in order to reach these levels.

The preferred catalysts used for a demetallization pretreatment comprise 1—5%wt of nickel and 5—15%wt of molybdenum, both percentages based on total catalyst. The preferred molybdenum:nickel weight ratio lies between 3:1 and 6:1. These metals may be incorporated into the catalyst by any method known in the art, for example by impregnation of alumina in one or more stages with an aqueous solution containing one or more salts of the metals concerned. Suitable conditions for carrying out the demetallization pre-treatment comprise a temperature of 370—420°C; a total pressure of 65—220 bar; a partial hydrogen pressure of 60—200 bar; a space velocity of 0.2—2 kg oil/l catalyst/hour; and a hydrogen feed rate of 250—2500 Nl/kg oil.

The gas streams separated from both the pre-treated and the converted hydrocarbon oils, as well as the residual fractions and the products obtained, can all be partially or completely recycled.

The invention will now be illustrated by the following examples:

Example 1

This example describes the preparation of a hydroconversion catalyst wherein surface-bound MoS$_2$ is formed by oxidizing zero-valent molybdenum with elemental sulphur rather than reducing the metal oxide with a H$_2$/H$_2$S gas mixture, as is usually done.

Two catalyst samples A and B were prepared by aqueous dry impregnation of 200 g of 1.6 mm gamma alumina extrudate support with 150 ml of an aqueous solution containing 33.4 g Ni(H$_2$O)$_4$(OAc)$_2$ and 32.4 g 85% H$_3$PO$_4$, followed by drying the composite for 12 hours at 120°C. The nickel acetate was added in sufficient quantity to provide about 2.5—3.0%wt Ni. The impregnated Al$_2$O$_3$ support was then contacted with a mixture of Mo(CO)$_6$, cycloheptatriene, S$_8$ and tetrahydrofuran (THF) for 72 hours under refluxing conditions (67°C). The catalysts were then washed with THF, air dried for 12 hours at 25°C and calcined for 1 hour at 300°C under N$_2$. Catalysts A and B contained 10.4%wt and 11.8%wt Mo, respectively.

These two catalysts were compared to a standard commercial hydrotreating catalyst (available from Shell Chemical Company, USA) using a standard catalytically cracked heavy gas oil feed under first stage hydrocracking conditions. (Feed properties: 88.99% C; 9.68% $H_2$; 1.28% S; 482 ppm N). For these tests, 10.4 $cm^3$ of 0.33 to 1.0 mm (16/45 mesh) catalyst were placed in a microreactor and used to contact the feed at 344°C, 58.2 bar and $H_2$/oil ratio = 4/1 l/le. Results of the tests are shown in Table 1.

The relative activity of the standard catalyst was taken as 1.00, as said hereinbefore. Catalysts A and B showed an average increase in HDN activity of about 35% over the standard commercial catalyst.

## TABLE 1

### ACTIVITY TEST RESULTS

| Catalyst | Relative Activity | | | Composition | | |
| | Hydro-genation [a] | Hydrode-nitrification [b] | Hydrode-sulphurization [c] | %Mo | %Ni | Surface Area |
|---|---|---|---|---|---|---|
| Commercial | 1.00 | 1.00 | 1.00 | 13.2 | 2.7 | 160 m²/g |
| A | 1.00 | 1.32 | .98 | 10.4 | 2.5 | 177 m²/g |
| B | 1.05 | 1.38 | 1.04 | 11.8 | 2.5 | 181 m²/g |

[a] $H_2$ consumption/$H_2$ consumption for commercial catalyst.

[b] Hydrodenitrification rate constant/hydrodenitrification rate constant of commercial catalyst.

[c] Hydrodesulphurization rate constant/hydrodesulphurization rate constant of commercial catalyst.

EP 0 156 425 B1

### Example 2

This example describes the preparation of a hydrotreating catalyst using a silica support.

Two catalysts, C and D, were prepared starting with Grade 57 silica support, manufactured by Davison, a division of W. R. Grace Co. Catalyst C, which is included for comparison since it was not prepared according to the invention, was prepared by a conventional aqueous, pore-filling impregnation, whereby sufficient nickel carbonate and ammonium dimolybdate were present in an aqueous solution of ammonium hydroxide, to impart the desired composition to the finished catalyst. The impregnated catalyst was then dried at 120°C for 4 hours and calcined in air at 500°C for 2 hours. This catalyst was sulphided in a conventional manner, by contact at elevated temperature (400°C) with hydrogen containing 5%v $H_2S$, for 7 hours.

Catalyst D was prepared according to the invention by dissolving 17.5 g $[Ni(H_2O)_4OAc]OAc$ in 70 ml concentrated $NH_4OH$ and using the solution to impregnate 75 g Davison Grade 57 silica 0,3 to 0,71 mm (25/45 mesh), calcined at 500°C). This composite was then dried for 18 hours at 120°C under nitrogen vacuum. The dried material was heated at reflux for 24 hours in tetrahydrofuran (THF) with 100 g $Mo(CO)_6$, 32 g $S_8$, and 75 ml cycloheptatriene in 250 ml THF. The catalyst was then cooled, collected on a 0.18 mm (60 mesh) screen, air dried at 25°C for 4 hours, and calcined at 300°C under flowing nitrogen for 18 hours.

Catalysts C and D, were then tested in the standard catalytically cracked heavy gas oil test, as set out in Example 1 above. Results of the tests are given in Table 2. As can be seen, the HDN activity of Catalyst D was increased 8 fold over the conventionally prepared silica based Catalyst C.

EP 0 156 425 B1

TABLE 2

| Catalyst | Relative Activity | | | Composition, %wt | |
|---|---|---|---|---|---|
| | Hydro-genation | Hydrode-nitrification | Hydrode-sulphurization | Mo | Ni |
| C | .76 | .17 | .20 | 15 | 3.0 |
| D | 1.0 | 1.35 | 1.0 | ~17 | ~3 |

# EP 0 156 425 B1

**Claims**

1. A process for preparing supported hydroconversion catalysts having improved hydrodenitrification activity, which comprises mixing an amount of molybdenum and/or tungsten carbonyl compound(s) sufficient to provide from about 10 to 20%wt metal on a suitable support (percentage based on total catalyst) with at least a catalytically active amount of an organic liquid selected from the group consisting of dienes, trienes or monoaromatics, optionally in the presence of an organic solvent, adding sufficient elemental sulphur to said liquid mixture to convert said carbonyl compound(s) to the corresponding disulphide; mixing a desired quantity of dried solid catalyst support with said liquid mixture; heating said liquid-solid mixture until metal carbonyl conversion to disulphide is substantially complete; separating supported catalyst from any excess liquid mixture; drying said catalyst and calcining said catalyst under inert gas at elevated temperature.

2. A process according to claim 1, wherein the catalyst support used contains from 1 to 5%wt nickel and/or cobalt before it is mixed with said liquid mixture.

3. A process according to claim 2, wherein the support used is selected from the group consisting of alumina, silica or mixtures thereof, which support may also include a crystalline silicate zeolite.

4. A process according to claim 1 or 2, wherein molybdenum and/or tungsten carbonyl is impregnated into said support in the presence of cycloheptatriene and tetrahydrofuran.

5. A process according to claim 4, wherein the catalyst support used comprises nickel and molybdenum supported on alumina or nickel supported on silica before its mixing with said liquid mixture.

6. A supported hydroconversion catalyst with improved hydrodenitrification activity which contains catalytically active amounts of Group VIII and Group VIB metals incorporated into a suitable support, and which catalyst has been prepared by mixing an amount of molybdenum and/or tungsten carbonyl compound(s) sufficient to provide from about 10 to 20%wt metal on a suitable support (percentage based on total catalyst) with at least a catalytically active amount of an organic liquid selected from the group consisting of dienes, trienes or monoaromatics, optionally in the presence of an organic solvent; adding sufficient elemental sulphur to said liquid mixture to convert said carbonyl compound(s) to the corresponding disulphide; mixing a desired quantity of dried solid catalyst support with said liquid mixture; heating said liquid-solid mixture until metal carbonyl conversion to disulphide is substantially complete; separating supported catalyst from any excess liquid mixture; drying said catalyst and calcining said catalyst under inert gas at elevated temperature.

7. A catalyst according to claim 6, wherein said catalytically active Group VIII metal is nickel and/or cobalt and said Group VIB metal is molybdenum and/or tungsten.

**Patentansprüche**

1. Ein Verfahren zur Herstellung von für die Umwandlung in Gegenwart von Wasserstoffgeeigneten Katalysatoren auf einem Träger, welche eine verbesserte Hydrodenitrifizierungsaktivität aufweisen, welches Verfahren das Vermischen einer Menge an Molybdän- und/oder Wolframcarbonylverbindung(en), die ausreicht, um ca. 10 bis 20 Gewichtsprozent Metall auf einem geeigneten Träger zu erhalten (die Prozentangabe bezieht sich auf den Gesamtkatalysator), mit mindestens einer katalytisch wirksamen Menge einer organischen Flüssigkeit, ausgewählt aus der Gruppe bestehend aus Dienen, Trienen oder Monoaromaten, gegebenenfalls in Gegenwart eines organischen Lösungsmittels, das Zugeben von elementarem Schwefel zu der genannten flüssigen Mischung in einer für die Umwandlung der genannten Carbonylverbindung(en) in das entsprechende Disulfid ausreichenden Menge, das Mischen einer gewünschten Menge an getrocknetem festem Katalysatorträger mit der genannten flüssigen Mischung, das Erhitzen der genannten Flüssig-Fest- Mischung, bis die Umwandlung des Metallcarbonyls in Disulfid im wesentlichen abgeschlossen ist, das Abtrennen des auf einem Träger befindlichen Katalysators von jeglicher überschüssigen flüssigen Mischung, das Trocknen des genannten Katalysators und das Calzinieren des genannten Katalysators unter Inertgas bei erhöhter Temperatur umfaßt.

2. Ein Verfahren nach Anspruch 1, in welchem der eingesetzte Katalysatorträger 1 bis 5 Gewichtsprozent Nickel und/oder Kobalt enthält, bevor er mit der genannten flüssigen Mischung vermischt wird.

3. Ein Verfahren nach Anspruch 2, in welchem der eingesetzte Träger ausgewählt ist aus der Gruppe, bestehend aus Aluminiumoxid, Siliciumdioxid oder Mischungen davon, welcher Träger weiterhin einen kristallinen Silikatzeolith enthalten kann.

4. Ein Verfahren nach Anspruch 1 oder 2, in welchem der genannte Träger mit Molybdän- und/oder Wolframcarbonyl in Gegenwart von Cycloheptatrien und Tetrahydrofuran imprägniert wird.

5. Ein Verfahren nach Anspruch 4, in welchem der eingesetzte Katalysatorträger Nickel und Molybdän auf einem Aluminiumoxidträger oder Nickel auf einem Siliciumdioxidträger enthält, bevor er mit der genannten flüssigen Mischung vermischt wird.

6. Ein für die Umwandlung in Gegenwart von Wasserstoff geeigneter Katalysator auf einem Träger, mit verbesserter Hydrodenitrifizierungsaktivität, welcher katalytisch wirksame Mengen an Metallen der Gruppe VIII und der Gruppe VIB in einen geeigneten Träger eingearbeitet enthält, und welcher Katalysator hergestellt wurde durch Mischen einer Menge an Molybdän- und/oder Wolframcarbonylverbindung(en), welche ausreicht, um ca. 10 bis 20 Gewichtsprozent Metall auf einem geeigneten Träger zu erhalten (die Prozentangabe bezieht sich auf denn Gesamtkatalysator), mit mindestens einer katalytisch wirksamen Menge einer organischen Flüssigkeit, ausgewählt aus der Gruppe bestehend aus Dienen, Trienen oder Monoaromaten, gegebenenfalls in Gegenwart eines organischen Lösungsmittels, Zugeben von ausreichend elementarem Schwefel zu der genannten flüssigen Mischung, um die genannte(n) Carbonylverbindung(en) in das entsprechende Disulfid umzuwandeln, Mischen einer gewünschten Menge an getrocknetem festem Katalysatorträger mit der genannten flüssigen Mischung, Erhitzen der genannten Flüssig-Fest- Mischung, bis die Umwandlung von Metallcarbonyl in Disulfid im wesentlichen abgeschlossen ist, Abtrennen des Katalysators auf einem Träger von jeglicher überschüssigen flüssigen Mischung, Trocknen des genannten Katalysators und Calzinieren des genannten Katalysators unter Inertgas bei erhöhter Temperatur.

7. Ein Katalysator nach Anspruch 6, in welchem das genannte katalytisch wirksame Metall der Gruppe VIII Nickel und/oder Kobalt ist und das genannte Metall der Gruppe VIB Molybdän und/oder Wolfram ist.

**Revendications**

1. Un procédé de préparation de catalyseurs d'hydroconversion supportés ayant une activité d'hydrodenitrification améliorée, qui comprend les étapes selon lesquelles on mélange une quantité d'un ou plusieurs composés carbonylés du molybdène et/ou du tungstène suffisante pour fournir d'environ 10 à 20% en poids de métal sur un support approprié (pourcentage par rapport au catalyseur total) avec au moins une quantité catalytiquement active d'un liquide organique choisi dans le groupe constitué par les diènes, les triènes et les composés monoaromatiques, éventuellement en présence d'un solvant organique; on ajoute assez de soufre élémentaire à ce mélange liquide pour transformer le ou les composés carbonylés en disulfure correspondant; on mélange une quantité désirée de support de catalyseur solide séché avec ce mélange liquide; on chauffe le mélange liquide solide jusqu'à ce que la conversion du ou des métauxcarbonyles en disulfure correspondant soit substantiellement complète; on sépare le catalyseur supporté de tout mélange liquide en excès; on sèche ce catalyseur et on le calcine sous un gaz inerte à température élevée.

2. Un procédé selon la revendication 1, dans lequel le support de catalyseur utilisé contient de 1 à 5% en poids de nickel et/ou de cobalt avant d'être mélangé avec le mélange liquide.

3. Un procédé selon la revendication 2, dans lequel le support utilisé est choisi dans le groupe constitué par l'alumine, la silice et leurs mélanges, ce support pouvant comprendre aussi une zéolite silicate cristalline.

4. Un procédé selon la revendication 1 ou 2, dans lequel du molybdène- et/ou du tungstène-carbonyle est introduit par imprégnation dans le support en présence de cycloheptatriène et de tétrahydrofuranne.

5. Un procédé selon la revendication 4, dans lequel le support de catalyseur utilisé comprend du nickel et du molybdène déposés sur de l'alumine ou du nickel déposé sur de la silice avant son mélange avec le mélange liquide.

6. Un catalyseur d'hydroconversion supporté ayant une activité d'hydrodénitrification améliorée qui contient des quantités catalytiquement actives de métaux du groupe VIII et du groupe VIB incorporées dans un support approprié, et qui a été préparé en mélangeant une quantité d'un ou plusieurs composés carbonylés du molybdène et/ou du tungstène suffisante pour fournir d'environ 10 à 20% en poids de métal sur un support approprié (pourcentage par rapport au catalyseur total) avec au moins une quantité catalytiquement active d'un liquide organique choisi dans le groupe constitué par les diènes, les triènes et les composés monoaromatiques, éventuellement en présence d'un solvant organique; en ajoutant assez de soufre élémentaire à ce mélange liquide pour transformer le ou les composés carbonylés en disulfure correspondant; en mélangeant une quantité désirée de support de catalyseur solide séché avec ce mélange liquide; en chauffant le mélange liquide-solide jusqu'à ce que la conversion du ou des métaux-carbonyles en disulfure soit substantiellement complète; en séparant le catalyseur supporté de tout mélange liquide en excès; en séchant ce catalyseur et en le calcinant sous un gaz inerte à température élevée.

7. Un catalyseur selon la revendication 6, dans lequel le métal catalytiquement actif du groupe VIII est du nickel et/ou du cobalt et le métal du groupe VIB est du molybdène et/ou du tungstène.